# EUROPÄISCHE PATENTANMELDUNG

(11) **EP 2 395 429 A1**
(43) Veröffentlichungstag der Anmeldung: **14.12.2011**
(21) Anmeldenummer: 10175967.8
(22) Anmeldetag: 09.09.2010
(51) Int. Cl.: G06F 9/455, G06F 9/46

(54) **Anordnung und Verfahren zum Betrieb einer Speicherprogrammierbaren Steuerung**

(30) Priorität: 09.06.2010 EP 10003468; 10.06.2010 EP 10003482
(71) Anmelder: Siemens Aktiengesellschaft, 80333 München (DE)
(72) Erfinder: Heuser, Frederik, 92224, Amberg (DE); Winter, Robert, 92355, Velburg (DE)

(57) **Zusammenfassung**

Die Erfindung betrifft eine Anordnung und ein Verfahren zum Betrieb einer speicherprogrammierbaren Steuerung, wobei die speicherprogrammierbare Steuerung aus einem Computer mit einem Betriebsprogramm (BP) gebildet ist, wobei das Betriebsprogramm (BP) zum Ablauf auf einem Basis-Betriebssystem (BBS) des Computers eingerichtet ist, und wobei das Betriebsprogramm (BP) zur Übertragung von Daten zu einer auf dem Computer installierten Anwendung (AW) eingerichtet ist. Dabei ist auf dem Computer in einer virtuellen Laufzeitumgebung (VM) des Basis-Betriebssystems (BBS) ein zweites Betriebssystem (ZBS) installiert, wobei die Anwendung (AW) auf dem zweiten Betriebssystem installiert ist, und wobei Mittel (MD) zum Austausch der Daten zwischen dem Basis-Betriebssystem (BBS) und dem zweiten Betriebssystem vorgesehen sind, wobei die Daten von dem Betriebsprogramm (BP) zu der Anwendung (AW) übertragbar sind. Dadurch können auch solche Anwendungen (AW) zum Datenaustausch mit dem Betriebsprogramm (BP) betrieben werden, die nicht mit dem Basis-Betriebssystem (BBS) lauffähig sind.

## Beschreibung

Die Erfindung betrifft eine Anordnung zum Betrieb einer speicherprogrammierbaren Steuerung gemäß dem Oberbegriff des Patentanspruchs 1, und ein Verfahren zum Betrieb einer Speicherprogrammierbaren Steuerung gemäß dem Oberbegriff des Patentanspruchs 8.

Neben den klassischen speicherprogrammierbaren Steuerungen, die gemeinhin auf einer proprietären Hard- und Software basieren, sind weiterhin speicherprogrammierbare Steuerungen gebräuchlich, welche auf einer gebräuchlichen Computer-Hardware gemäß des Industriestandards (Personal-Computer oder Server) basieren. Bei den letztgenannten Lösungen wird der Personal-Computer o.ä. mit einem gebräuchlichen Betriebssystem (meist Microsoft Windows) versehen, wobei auf Basis dieses Betriebssystems ein Betriebsprogramm installiert wird, welches die Funktionalität der "klassischen" speicherprogrammierbaren Steuerungen umfasst. Solche Anordnungen werden oft auch als "Soft-SPS" bezeichnet, also als speicherprogrammierbare Steuerung, die als eine Software-Lösung realisiert ist. Um die für Steuerungsaufgaben häufig gewünschte sog. "Echtzeitfähigkeit" auch den beschriebenen als Software realisierten speicherprogrammierbaren Steuerungen zu verleihen, ist ein Betriebssystem notwendig, welches dem Betriebsprogramm zuverlässig und vorherbestimmbar Zugriff und Zugriffszeit auf die Ressourcen der Computer-Hardware zuteilt. Diese sog. "Echtzeitfähigkeit" weisen jedoch viele gebräuchliche Betriebssysteme nicht auf, so dass es zur Erlangung der "Echtzeitfähigkeit" oft notwendig ist, ein Betriebsprogramm auf einem weniger gebräuchlichen, spezialisierten Betriebssystem zu installieren.

Andererseits sind die mittels eines Betriebsprogramms realisierten "Soft-SPS"-Anordnungen gerade dann von Vorteil, wenn sie auf einem gemeinhin gebräuchlichen Betriebssystem, wie beispielsweise Microsoft Windows, Linux, Mac OS etc. installiert werden, weil sich einem Anwender dadurch die Möglichkeit eröffnet, neben dem Betriebsprogramm auch andere Anwendungen zu installieren und parallel zu betreiben, die für ein spezialisiertes Betriebssystem oft nicht vorhanden bzw. verfügbar sind. Zur Lösung des Problems werden daher gebräuchliche Betriebssysteme, beispielsweise Microsoft Windows XP, mit einer sog. Echtzeit-Erweiterung versehen, die es möglich macht, Programme, die dafür eingerichtet bzw. speziell für diesen Zweck compiliert sind, in einem "Echtzeit-Modus" arbeiten zu lassen. Dies wird für die Betriebsprogramme der "Soft-SPS"-Systeme genutzt. Eine solche Echtzeiterweiterung ist beispielsweise das Produkt "RTX" ("Real-Time Extension") des Herstellers Interval Zero.

Ein besonderer Vorteil des Einsatzes von den "Soft-SPS"-Systemen besteht, wie bereits erwähnt, darin, dass ein Datenaustausch während des laufenden Betriebs zwischen der "Soft-SPS", also dem Betriebsprogramm, und einer beliebigen Anwendung, die ebenfalls auf dem Basis-Betriebssystem abläuft, stattfinden kann. So kann beispielsweise durch eine gebräuchliche Anwendung, beispielsweise Microsoft Excel, eine laufende Visualisierung oder Weiterverarbeitung von Messwerten und Betriebswerten der speicherprogrammierbaren Steuerung erfolgen.

Nachteilig an den geschilderten Anordnungen ist, dass die Betriebsprogramme, die die "Soft-SPS" bilden, häufig nur auf einem bestimmten Betriebssystem und darüber hinaus einem bestimmten Versionsstand dieses Betriebssystems lauffähig sind. Dies betrifft um so mehr die Anordnungen, die mit einer Echtzeiterweiterung versehen sind, weil in einem solchen Fall das Betriebsprogramm speziell für einen Betrieb mit der verwendeten Echtzeiterweiterung und einen Betrieb des vorgesehenen Basis-Betriebssystems kompiliert sein muss. Dies bedeutet, dass eine einfache Portierung des Betriebsprogramms und somit der als Software ausgebildeten speicherprogrammierbaren Steuerung zu einem anderen Basis-Betriebssystem oft nicht möglich ist. Dies hat jedoch zur Folge, dass eine Anwendung, die zum Datenaustausch mit der "Soft-SPS" vorgesehen ist, ebenfalls auf dem gleichen Basis-Betriebssystem installiert sein muss. Sofern die Anwendung für das verwendete Basis-Betriebssystem nicht verfügbar ist, muss in einem solchen Fall entweder das Betriebsprogramm, ggf. mit der Echtzeit-Erweiterung, oder die Anwendung auf ein gemeinsam nutzbares Basis-Betriebssystem portiert werden.

Es ist daher eine Aufgabe der vorliegenden Erfindung, auch solche Anwendungen gemeinsam mit einer "Soft-SPS" auf einer Computer-Hardware zu betreiben, die nicht zwingend das gleiche Basis-Betriebssystem der "Soft-SPS" verwenden, und dabei einen Datenaustausch zwischen der Anwendung und der "Soft-SPS", also dem die speicherprogrammierbare Steuerung bildende Betriebsprogramm, zu ermöglichen.

Es ist dabei eine zentrale Idee der erfindungsgemäßen Lösung des Problems, dass die Anwendung auf einem zweiten Betriebssystem installiert ist, welches wiederum in einer virtuellen Maschine, also einer virtuellen Laufzeitumgebung, abläuft, die in oder auf dem Basis-Betriebssystem etabliert ist. Dabei sollen erfindungsgemäß Mittel zum Datenaustausch, z.B. ein Interface o. ä., etabliert werden, welche innerhalb der virtuellen Laufzeitumgebung genutzt werden können, und wodurch die Anwendung Daten mit der "Soft-SPS" austauschen kann.

Die Aufgabe wird insbesondere durch eine Anordnung gemäß dem Patentanspruch 1 und durch ein Verfahren gemäß dem Patentanspruch 8 gelöst.

Dabei ist eine Anordnung zum Betrieb einer speicherprogrammierbaren Steuerung vorgesehen, wobei das Betriebsprogramm zum Ablauf auf einem Basis-Betriebssystem des Computers eingerichtet ist, und wobei das Betriebsprogramm zur Übertragung von Daten zu einer auf dem Computer installierten Anwendung eingerichtet ist. Dabei ist auf dem Computer in einer virtuellen Laufzeitumgebung des Basis-Betriebssystems ein zweites Betriebssystem installiert, wobei die Anwendung auf dem zweiten Betriebssystem installiert ist. Weiter sind Mittel zum Austausch der Daten zwischen dem Basis-Betriebssystem und dem zweiten Betriebssystem vorgesehen, wobei die Daten von dem Betriebsprogramm zu der Anwendung übertragbar sind. Eine solche Anordnung ermöglicht die Verwendung einer Anwendung unter einem zweiten Betriebssystem, also ohne diese Anwendung für einen Betrieb unter dem Basis-Betriebssystem bzw. auf dem Basis-Betriebssystem portieren zu müssen. Eine solche Anwendung kann mit dem Betriebsprogramm und somit der "Soft-SPS" kommunizieren, ohne deren Echtzeitfähigkeit zu gefährden. Ein weiterer Vorteil besteht darin, dass die Anwendung und das zweite Betriebssystem durch die virtuelle Laufzeitumgebung von dem Basis-Betriebssystem und damit der Laufzeitumgebung der speicherprogrammierbaren Steuerung entkoppelt sind, so dass eine Störung (beispielsweise "Absturz") der virtuellen Laufzeitumgebung oder der Anwendung keine negativen Auswirkungen auf die speicherprogrammierbare Steuerung haben kann.

Die Lösung der Aufgabe sieht weiter ein Verfahren zum Betrieb einer speicherprogrammierbaren Steuerung vor, wobei die speicherprogrammierbare Steuerung als ein Betriebsprogramm auf einem Computer installiert wird, wobei das Betriebsprogramm zum Ablauf auf einem Basis-Betriebssystem des Computers installiert wird, und wobei das Betriebsprogramm zur Übertragung von Daten zu einer auf dem Computer installierten Anwendung eingerichtet wird. Dabei wird auf dem Computer in einer virtuellen Laufzeitumgebung, die als eine Anwendung auf dem Basis-Betriebssystem ablaufen kann, ein zweites Betriebssystem installiert, wobei die Anwendung auf dem zweiten Betriebssystem installiert wird, und wobei Mittel zum Austausch der Daten zwischen dem Basis-Betriebssystem und dem zweiten Betriebssystem derart vorgesehen werden, dass die Daten von dem Betriebsprogramm zu der Anwendung übertragbar sind.

Durch ein solches Verfahren können die Vorteile der erfindungsgemäßen Anordnung realisiert werden.

Vorteilhafte Ausgestaltungen der erfindungsgemäßen Anordnung sind in den abhängigen Patentansprüchen angegeben. Die dabei beschriebenen Merkmale und Vorteile gelten sinngemäß auch für das erfindungsgemäße Verfahren.

Vorteilhaft umfasst das Basis-Betriebssystem eine Erweiterung für einen Echtzeit-Betrieb, wobei das Betriebsprogramm als Client dieser Erweiterung installiert ist. In einer solchen Anordnung ist ein asynchroner Betrieb möglich, d.h. dass neben dem Betriebsprogramm, welches unter Echtzeitbedingungen abläuft, die Anwendung unter beliebigen Bedingungen, also auch Nicht-Echtzeit-Bedingungen, ablaufen kann.

In einer weiteren vorteilhaften Ausgestaltung sind nicht nur Daten von dem Betriebsprogramm zu der Anwendung übertragbar, sondern die Mittel gestatten auch eine Übertragung von Steuerungsanweisungen und anderen Daten von der Anwendung zu dem Betriebsprogramm. Die Mittel können dabei einen gemeinsam durch das Basis-Betriebssystem und das zweite Betriebssystem bzw. die virtuelle Laufzeitumgebung benutzten Arbeitsspeicher-Bereich des Computers umfassen. Alternativ oder zusätzlich können die Mittel zumindest eine in der virtuellen Laufzeitumgebung installierte Treiber-Software umfassen. Eine solche Treiber-Software macht der Anwendung die Daten des Betriebsprogramms in derselben Weise zugänglich, als ob das Betriebsprogramm auf dem gleichen zweiten Betriebssystem installiert wäre, wie die Anwendung. Eine solche Treiber-Software kann beispielsweise den Datenaustausch mittels eines Netzwerkprotokolls anbieten, so dass die Anwendung die Daten genauso austauscht, als kämen sie von einer tatsächlich vorhandenen Netzwerkverbindung, beispielsweise nach dem TCP/IP-Protokoll, oder einer anderen Anwendung des zweiten Betriebssystems.

Ein besonders vorteilhafter Anwendungsfall der erfindungsgemäßen Anordnung ist gegeben, wenn das Basis-Betriebssystem und das zweite Betriebssystem unterschiedlichen Typs oder unterschiedlichen Versionsstandes sind.

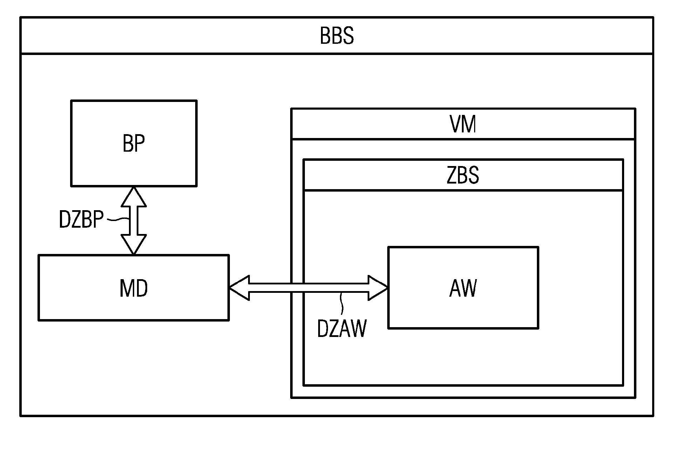

Ein Ausführungsbeispiel der erfindungsgemäßen Anordnung wird nachfolgend anhand der Zeichnung erläutert. Dieses Ausführungsbeispiel dient gleichzeitig der Erläuterung eines erfindungsgemäßen Verfahrens.

Dabei zeigt die einzige Figur schematisch die Software-Struktur eines Computers mit einem Basis-Betriebssystem mit einem Betriebsprogramm, mit einer virtuellen Laufzeitumgebung, mit einem zweiten Betriebssystem und mit einer Anwendung.

In der Figur ist schematisch die Software-Struktur eines Computers (ein gebräuchlicher Personal Computer) dargestellt, der als eine speicherprogrammierbare Steuerung eingesetzt werden soll. Auf dem Computer ist ein Basis-Betriebssystem BBS installiert, hier: Microsoft Windows XP. Ein darauf installiertes Betriebsprogramm BP verleiht dabei dem Computer diejenige Funktionalität, die auch eine "klassische" speicherprogrammierbare Steuerung, beispielsweise eine Siemens Simatic S700, aufweist. Das Betriebsprogramm BP wird auch als "Soft-SPS" bezeichnet; ein Beispiel für ein solches System wird von der Fa. Siemens unter der Bezeichnung Simatic WinAC angeboten. Das Basis-Betriebssystem ist mit einer (in der Figur nicht dargestellten) Echtzeit-Erweiterung, hier: die Software RTX des Herstellers Interval Zero, ausgerüstet. Diese Echtzeit-Erweiterung stellt dem Betriebsprogramm BP einen Teil der Ressourcen des Computers derart zur Verfügung, dass ein deterministischer Betrieb des Betriebsprogramms BP möglich ist.

Das Basis-Betriebssystem BBS fungiert weiterhin als "Host" für eine virtuelle Laufzeitumgebung VM; eine solche kann beispielsweise durch die Software VMware des gleichnamigen Herstellers realisiert werden. In dieser virtuellen Laufzeitumgebung VM läuft ein zweites Betriebssystem ZBS, welches beispielsweise dasselbe Betriebssystem sein kann, wie das Basis-Betriebssystem BBS. Die Vorteile der vorliegenden Erfindung kommen jedoch dann deutlich zur Geltung, wenn innerhalb der virtuellen Laufzeitumgebung VM ("Virtual Machine") ein beliebiges anderes Betriebssystem installiert wird, beispielsweise Linux oder ein anderes Betriebssystem der Microsoft Windows-Familie, beispielsweise Windows 7. Dieses zweite Betriebssystem ZBS bildet nun einen "Host" für eine Anwendung AW, die beispielsweise zur Verarbeitung und/oder Visualisierung von Daten und Zuständen des Betriebsprogramms BP, also der als Software gebildeten speicherprogrammierbaren Steuerung und eines damit gesteuerten Automatisierungsprozesses, verwendet werden.

Der Computer ist mit Mitteln MD zum Datenaustausch ausgerüstet, mit dem zumindest Daten von dem Betriebsprogramm BP zu der Anwendung AW, vorteilhaft jedoch Daten in beiden Richtungen übertragen werden können. Diese Mittel MD umfassen vorteilhaft ein sog. "offenes Interface", welches beispielsweise einen gemeinsam benutzten Arbeitsspeicherbereich ("Shared Memory") für den Datenaustausch verwendet. Diese Mittel MD sind vorteilhaft Bestandteil des Betriebsprogramms BP, oder zumindest innerhalb der Laufzeitumgebung, die durch die Echtzeit-Erweiterung erzeugt wird, angeordnet, und stellen in der virtuellen Laufzeitumgebung VM eine Programmierschnittstelle, einen Datenzugriffspunkt ("Socket"), eine Netzwerkverbindung oder eine andere standardisierte Datenzugriffsmöglichkeit bereit. Derjenige Teil der Mittel MD, der seitens der virtuellen Laufzeitumgebung VM die Daten bereitstellt, kann spezifisch für das jeweils verwendete zweite Betriebssystem ZBS oder zumindest spezifisch für die virtuelle Laufzeitumgebung VM erstellt sein.

Über die Mittel MD zum Datenaustausch können somit also zwei Datenströme ausgetauscht werden, nämlich zum Einen der Datenstrom DZAW ("Datenzugriff Anwendung"), und zum Anderen der Datenstrom DZBP ("Datenzugriff Betriebsprogramm"). In einem bidirektionalen Anwendungsfall, bei dem also nicht nur Daten vom Betriebsprogramm BP zu der Anwendung AW übermittelt werden können, sondern auch umgekehrt, können insbesondere auch Steuerungsdaten von der Anwendung AW zu dem Betriebsprogramm BP übermittelt werden, die der "Bedienung" der als Software nachgebildeten speicherprogrammierbaren Steuerung dienen.

## Patentansprüche

1. Anordnung zum Betrieb einer speicherprogrammierbaren Steuerung, wobei die speicherprogrammierbare Steuerung aus einem Computer mit einem Betriebsprogramm (BP) gebildet ist,
wobei das Betriebsprogramm (BP) zum Ablauf auf einem Basis-Betriebssystem (BBS) des Computers eingerichtet ist, und
wobei das Betriebsprogramm (BP) zur Übertragung von Daten zu einer auf dem Computer installierten Anwendung (AW) eingerichtet ist,
**dadurch gekennzeichnet,**
**dass** auf dem Computer in einer virtuellen Laufzeitumgebung (VM) ein zweites Betriebssystem (ZBS) installiert ist, wobei
die Anwendung (AW) auf dem zweiten Betriebssystem installiert ist, und
**dass** Mittel (MD) zum Austausch der Daten zwischen dem Basis-Betriebssystem (BBS) und dem zweiten Betriebssystem vorgesehen sind, wobei die Daten von dem Betriebsprogramm (BP) zu der Anwendung (AW) übertragbar sind.

2. Anordnung nach Patentanspruch 1,
**dadurch gekennzeichnet,**
**dass** das Basis-Betriebssystem (BBS) eine Erweiterung für einen Echtzeit-Betrieb umfasst, wobei das Betriebsprogramm (BP) als ein Client dieser Erweiterung installiert ist.

3. Anordnung nach einem der vorhergehenden Patentansprüche,
**dadurch gekennzeichnet,**
**dass** die Mittel (MD) auch zur Übertragung von Steuerungsanweisungen von der Anwendung (AW) zu dem Betriebsprogramm (BP) eingerichtet sind.

4. Anordnung nach einem der vorhergehenden Patentansprüche,
**dadurch gekennzeichnet,**
**dass** die Mittel (MD) einen gemeinsam durch das Basis-Betriebssystem (BBS) und das zweite Betriebssystem genutzten Arbeitsspeicher-Bereich des Computers umfassen.

5. Anordnung nach einem der vorhergehenden Patentansprüche,
**dadurch gekennzeichnet,**
**dass** die Mittel (MD) zumindest eine in der virtuellen Laufzeitumgebung installierte Treiber-Software umfassen.

6. Anordnung nach Patentanspruch 5,
**dadurch gekennzeichnet,**
**dass** die Treiber-Software zur Realisierung eines Datenaustauschs mittels eines Netzwerkprotokolls eingerichtet ist.

7. Anordnung nach einem der vorhergehenden Patentansprüche,
**dadurch gekennzeichnet,**
**dass** das Basis-Betriebssystem (BBS) und das zweite Betriebssystem unterschiedlichen Typs oder unterschiedlichen Versionsstandes sind.

8. Verfahren zum Betrieb einer speicherprogrammierbaren Steuerung, wobei die speicherprogrammierbare Steuerung als ein Betriebsprogramm (BP) auf einem Computer installiert wird,
wobei das Betriebsprogramm (BP) zum Ablauf auf einem Basis-Betriebssystem (BBS) des Computers installiert wird, und
wobei das Betriebsprogramm (BP) zur Übertragung von Daten zu einer auf dem Computer installierten Anwendung (AW) eingerichtet wird,
**dadurch gekennzeichnet,**
**dass** auf dem Computer in einer virtuellen Laufzeitumgebung des Basis-Betriebssystems (BBS) ein zweites Betriebssystem (ZBS) installiert wird, wobei die Anwendung (AW) auf dem zweiten Betriebssystem installiert wird, und
wobei Mittel (MD) zum Austausch der Daten zwischen dem Basis-Betriebssystem (BBS) und dem zweiten Betriebssystem derart vorgesehen werden, so dass die Daten von dem Betriebsprogramm (BP) zu der Anwendung (AW) übertragbar sind.
